# EUROPEAN PATENT SPECIFICATION

(11) **EP 4 258 960 B1**
(45) Date of publication and mention of the grant of the patent: **10.04.2024**
(21) Application number: 21824687.4
(22) Date of filing: 10.12.2021
(51) Int. Cl.: A47J 31/60, A47J 31/44, A47J 31/46

(54) **MILK MODULE FOR PRODUCING HOT OR COLD, FOAMED OR NON-FOAMED MILK**
MILCHMODUL ZUR HERSTELLUNG VON WARMER ODER KALTER, GESCHÄUMTER ODER UNGESCHÄUMTER MILCH
MODULE DE PRÉPARATION DU LAIT PERMETTANT DE PRÉPARER DU LAIT CHAUD OU FROID, AVEC OU SANS MOUSSE

(30) Priority: 10.12.2020 IT 202000030389
(43) Date of publication of application: 18.10.2023
(73) Proprietor: Rheavendors Industries S.p.A., 22100 Como (IT)
(72) Inventor: CERIANI, Ezio, 22100 Como (IT); SISTO, Giuseppe Antonio Ercolino, 22100 Como (IT)
(74) Representative: Studio Torta S.p.A.
(86) International application number: PCT/IB2021/061567
(87) International publication number: WO 2022/123516

(56) References cited:
- EP-A1- 3 064 104
- WO-A1-2010/066387
- DE-A1-102017 123 642
- DE-T5-112018 000 582
- DE-U1-202009 007 946

## Description

### Cross-Reference to Related Applications

This patent application claims priority to Italian patent application 102020000030389 filed on 10.12.2020.

### Technical Field of the Invention

The invention relates to a milk module for producing hot or cold, foamed or non-foamed milk, and integrable in a machine for producing milk-based beverages. In particular, the invention finds advantageous application in table-top machines for producing milk-based beverages, to which reference will be made in the description without loosing in generality.

### State of the Art

As is known, in the above-mentioned beverage production machines, the milk module usually comprises a washing circuit designed to periodically clean all those components of the milk module that, in use, come into contact with milk and, for this reason, are likely to be subjected to the proliferation of bacteria. Usually, the milk module is subjected to a water rinsing process at the end of each milk-based beverage producing cycle and a more in-depth washing process with water and detergent when the beverage production machine is not operating, normally at the end of a work day.

A known milk module usually comprises a milk line provided with a pump for sucking fresh milk from a milk container, a foaming device, a heating device and a dispensing nozzle, through which hot or cold, foamed or non-foamed milk is delivered into a cup or similar container.

During rinsing and washing processes, a given amount of water or water and detergent is cause to flow along the milk line and is drained into a waste container, normally via a valve.

In the table-top machines for producing milk-based beverages, usually the milk dispensing nozzle is stationary in a beverage dispensing compartment, so the washing liquid is normally prevented from flowing up to the beverage dispensing nozzle and is drained towards the waste container in a point of the milk line upstream of, and at a given distance from, the beverage dispensing nozzle. As a result, the end part of the milk line or, at least, the beverage dispensing nozzle is never involved in the washing process and require a manual cleaning intervention by an operator, who normally removes the beverage dispensing nozzle and washes it separately.

An example of an apparatus for preparing and dispensing hot or cold, foamed or non-foamed milk according to the preamble of Claim 1 is disclosed in EP 3 064 104 A1.

Further examples of apparatuses for preparing and dispensing hot or cold, foamed or non-foamed milk hot or cold are disclosed in WO 2019/072583 A1, WO 2018/139341 A1, WO 2009/150602 A1 e WO 2010/066387 A1.

### Object and Summary of the Invention

The object of the present invention is to provide a milk module for producing hot or cold, foamed or non-foamed milk and integrable in a machine for producing milk-based beverages, the milk module allowing the efficiency of the washing of those components of the milk module that, in use, come into contact with milk to be improved compared to that of known milk modules.

According to the present invention, a milk module for producing hot or cold, foamed or non-foamed milk and a machine for producing milk-based beverages are provided, as claimed in the appended claims.

### Brief Description of the Drawings

Figure 1 shows a hydraulic circuit of a preferred embodiment of a machine for producing milk-based beverages according to the present invention.
Figures 2 and 3 show, in a perspective view, a detail of the machine for producing milk-based beverages shown in Figure 1.
Figure 4 is a sectional view from the bottom of the detail shown in Figure 2 and 3.

### Description of Preferred Embodiments of the Invention

The invention will now be described in detail with reference to the attached figure to enable a skilled person to realize and use it. Various modifications to the embodiments presented shall be immediately clear to persons skilled in the art and the general principles disclosed herein could be applied to other embodiments and applications but without thereby departing from the scope of protection of the present invention as defined in the appended claims. Therefore, the examples are provided for illustrative purposes only and as such should not be considered limiting.

In order to facilitate understanding of the embodiments described herein, reference will be made to some specific embodiments and a specific language will be used to describe them. The terminology used herein is for the purpose of describing only particular embodiments, and is not intended to limit the scope of the present invention.

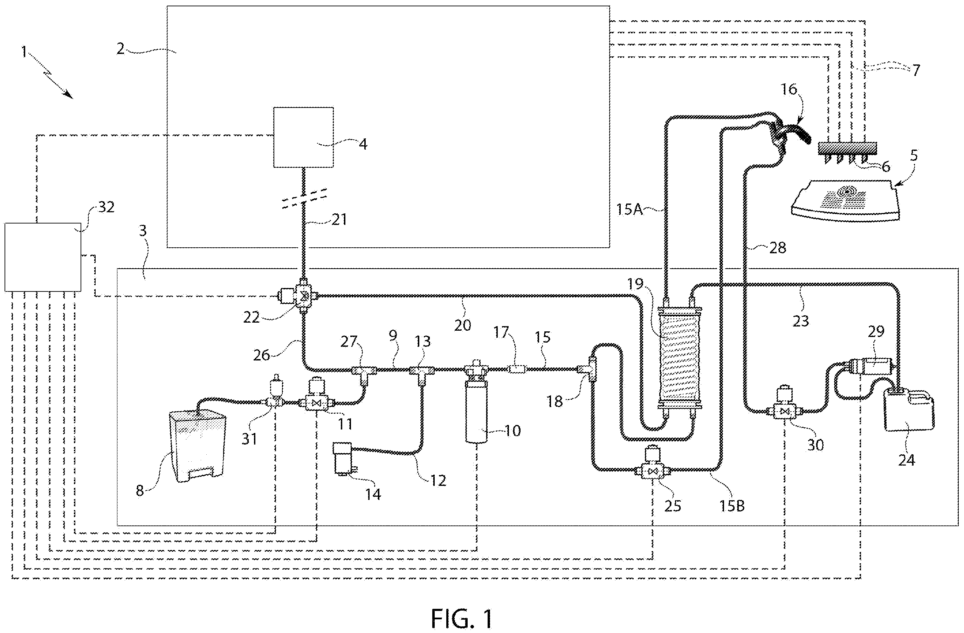

Figure 1 schematically shows a machine **1** for producing milk-based beverages and comprising a brewing unit **2** to produce beverages such as espresso and beverages from soluble products, and a milk module **3** to produce of hot or cold, foamed or non-foamed milk.

The brewing unit **2** comprises a plurality of conventional functional assemblies and, for this reason, will not be described in detail. In general, the brewing unit **2** comprises a brewer (not shown) to produce espresso, one or more mixers (not shown) to produce beverages from soluble products, a heater **4** to produce hot water or steam, and a pump (not shown) to supply the brewer and the mixers with hot water required to produce beverages.

The machine **1** further comprises a beverage dispensing compartment **5,** where a group of dispensing nozzles 6 are arranged, which are fluidically connected to the brewing unit **2** via respective supply lines **7** to receive, in use, beverages produced by the brewing unit **2** and dispense them into a cup or similar container (not shown) on a cup-carrier grid in the beverage dispensing compartment **5.**

The milk module **3** is selectively fluidically connectable to the brewing unit **2,** more precisely to the heater **4,** to receive, during operation, steam and hot water to be used, as explained more in detail below, to heat the milk and, respectively, to wash those components of the milk module **3** that, in use, come into contact with the milk and, hence, that need a regular cleaning in order to avoid the proliferation of bacteria.

Figure 1 schematically shows a hydraulic circuit of the milk module **3,** which comprises:
a milk container **8,** which is preferably arranged inside a refrigerated area to keep the milk at a temperature ranging from 3° to 5°;
a suction line **9** having a first end immersed in the milk container **8** and a second end fluidically connected to the suction side of a pump **10,** preferably a gear pump; the inflow of milk into the suction line **9** is controlled by a shut-off valve **11;**
an air line **12,** through which an ambient air flow is introduced into the suction **9** at a T joint **13** arranged upstream of the pump **10.** The inflow of air into the air line **12** is controlled by a valve **14,** which enables or inhibits the introduction of an air flow into the air line **12** depending on whether foamed or non-foamed milk, respectively, has to be produced. Conveniently, the valve **14** is a proportional solenoid valve, which allows the air flow rate to be adjusted according to closed-loop or open-loop control algorithms, which are widely known in the sector; and
a delivery line **15** designed to convey milk or milk and air mixture from the pump **10** to a milk dispensing nozzle **16** which is arranged in the beverage dispensing compartment **5** and is part of the group of dispensing nozzles **6.**

The delivery line **15** has, downstream of the pump **10,** a flow restriction **17** which defines a concentrated reduction of the cross section of the delivery line **15** so as to causa, in use, the milk and air mixture flowing therethrough to be subjected to a quick compression and to a successive quick expansion, which transforms, based on a principle well known to a person skilled in the art, the milk and air mixture into foamed milk.

The flow restriction **17** can be formed by a non- adjustable nozzle or by a baffle or by a throttle valve, which may be either adjustable or non-adjustable.

Downstream of the flow restriction **17,** the delivery line **15** has a bifurcation **18,** from which two parallel ducts branch off and both open into the milk dispensing nozzle **16.** One of the two ducts, hereinafter referenced with **15A,** supplies foamed or non-foamed hot milk to the milk dispensing nozzle **16,** whereas the other one of the two ducts, hereinafter referenced with **15B,** supplies foamed or non-foamed cold milk to the milk dispensing nozzle **16.**

The milk or the foamed milk flowing in the duct **15A** is heated by a heater **19,** which, according to a preferred embodiment shown in Figure 1, is in the form of a heat exchanger, in which the milk or the foamed milk is indirectly heated by a steam flow supplied to a cylindrical duct which winds around a spiral-shaped portion of the duct **15A.**

The steam flow supplied to the heater **19** is produced by the heater **4** of the brewing unit **2** and is conveyed to the heater **19** by a steam line **20** with a first end fluidically connected, via a three-way valve **22,** to a hot water/steam supply duct **21,** which, in turn, is directly or indirectly connected to an outlet of the heater **4,** and with a second end fluidically connected to an inlet of the spiral-shaped duct of the heater **19** to supply the latter with the steam flow.

On the opposite side, the spiral-shaped duct of the heater **19** has an outlet fluidically connected to a discharge line **23** designed to convey duct into a waste container **24** condensation water that is formed, during operation, by the cooling of the steam along the spiral-shaped duct.

Preferably, no shut-off valves are provided along the duct **15A** and, hence, the delivery line 15 is always in fluid communication with the milk dispensing nozzle **16,** regardless of whether steam is supplied to the heater **19** or not.

Along the duct **15B** a shut-off valve **25** is instead provided, which can be operated so as to allow the foamed or non-foamed cold milk to flow along the duct **15B** or prevent it from flowing depending on the type of beverage to be produced, as described more in detail below.

The milk module **3** further comprises a washing circuit having the function of washing the ducts of the milk module **3** where milk flows, both by a mere rinsing with water at the end of each milk-based beverage producing cycle or after the milk module 3 has not been used for a given amount of time, and by a more in-depth washing with detergent, which is normally carried out when the machine **1** is turned off, for example at the end of the day.

The washing circuit comprises a hot water supply line **26** to supply the suction line **9** with a hot water flow from the heater **4.** The hot water supply line **26** has an inlet coupled to an outlet of the three-way valve **22** to selectively fluidically communicate with the hot water/steam supply duct **21** and receive hot water from the heater **4.** The supply line **26** opens into the suction line **9** at a T joint **27** between the shut-off valve **11** and the T joint **13,** where the air line **12** open into the suction line **9.**

The washing circuit further comprises a drainage line **28** having the function of conveying either rinsing hot water or water and washing detergent mixture flowing in the delivery line **15,** namely from the outlets of the ducts **15A** and **15B,** into the waste container **24** so as to prevent it from reaching the outlet of the milk dispensing nozzle **16.**

Conveniently, the drainage line **28** is enabled during rinsing and washing operations to suck hot water or water and detergent mixture flowing along the suction line **9** and the delivery line **15** and, at the beginning of each milk-based beverage producing cycle, to suck the water that, after each rinsing, remains along the suction line **9** and the delivery line **15.**

According to a preferred embodiment shown in Figure 1, the drainage line **28** has a first end fluidically connected to the milk dispensing nozzle **16** upstream of the outlet thereof and a second end that opens into the waste container **24,** and comprises a pump **29** and a shut-off valve **30,** which is arranged on the suction side of the pump **29** and has the function of causing, when it is closed, the milk dispensing nozzle **16** to be fluidically isolated from the waste container **24.**

Optionally, the shut-off valve **30** can be omitted if the pump **29** is so designed so as to cause, when it is turned off, a fluid-tight separation between its suction and delivery sides.

The operation of the milk module **3** will be described below with reference to three different operating steps:
1) production of hot or cold, foamed or non-foamed milk;
2) rinsing with hot water at the end of a milk-based beverage producing cycle;
3) the washing with detergent when the machine is not working.

### 1) Production of hot or cold foamed or non-foamed milk

In response to a selection of a milk-based beverage, the electronic control unit **32** of the machine **1** operates the pump **10** to cause a given amount of milk to be sucked out of the milk container **8** and supplied to the delivery line **15.** If foamed milk is required, the electronic control unit **32** opens the valve **14** to allow a given quantity of air to flow into the air line **12** and be sucked into the milk flowing along the suction line **9.** The pump **10** is then operated to cause the milk and air mixture to flow through the flow restriction **17** in order to be transformed, in a cold state, into foamed milk.

If foamed or non-foamed hot milk is required, the electronic control unit **32** closes the shut-off valve **25** along the duct **15B** to prevent milk from flowing therealong and operates the heater **4** of the brewing unit **2** to cause steam to be produced and supplied to the hot water/steam supply duct **21.** At the same time, the three-way valve **22** is controlled so as to cause the steam produced by the heater **4** to be supplied to the heater **19** to heat the foamed or non-foamed milk flowing along the duct **15B.**

If foamed or non-foamed cold milk is required, the shut-off valve **25** of the duct **15B** is opened in order to allow milk to flow therethrough, whereas the three-way valve **22** is controlled to prevent steam from being supplied to the heater **19.** In this way, foamed or non-foamed cold milk reaches the milk dispensing nozzle **16** flowing through both ducts **15A** and **15B.**

It is worth noting that, if the milk module **3** is required to produce hot milk immediately before the production of cold milk, the heater **19,** even if it is not supplied with steam, preserves some residual heat which heats to a low extent the cold milk flowing along the duct **15A.** However, this heating fails to adversely affect the final temperature of the cold milk dispensed because the amount of cold milk flowing along the duct **15B** is greater than the amount of milk flowing along the duct **15A** and the low temperature of the cold milk along the duct **15B** mitigates the temperature increase in the milk flowing along the duct **15A.** The grater milk flow in the duct **15B** compared to the duct **15A,** when the shut-off valve **25** is open, derives from the heater **19** defining, due to its own conformation, a hydraulic resistance that counters to a certain extent the flow of milk along the duct **15A** and, resultingly, causes the duct **15B** to become a preferred path for the milk downstream of the bifurcation **18.**

### 2) Rinsing with hot water

At the end of a milk-based beverage producing cycle, the milk module **3** is subjected to a hot water rinsing in order to eliminate milk residues present along the suction line **9** and the delivery line **15** and in the different operating components distributed therealong.

The hot water used for rinsing is produced by the heater 4 and supplied to the water/steam supply line 21.

During rinsing, the electronic control unit 32 closes the shut-off valve 11 to fluidically isolate the milk container 8, opens the shut-off valve 25 to allow milk to flow along the duct 15B, and closes the valve 14 at the inlet of the air line 12.

At the same time, the three-way valve 22 is controlled so as to cause water to flow from the water/steam supply line 21 to the hot water supply line 26, and the pump 10 is operated to cause hot water to flow, through the pump **10,** from the suction line **9** to the delivery line **15** and, through both ducts **15A** and **15B,** reach the milk dispensing nozzle **16.**

Operation of the pump **29** prevents hot water, once it has entered the milk dispensing nozzle **16,** from reaching the outlet of the dispensing nozzle **16.** As a matter of fact, hot water is sucked by the pump **29** immediately upstream of the outlet of the dispensing nozzle **16** and is conveyed, through the drainage line **28,** into the waste container **24.** The shut-off valve **30** is obviously open during this step. After a given amount of time has elapsed, during which a predetermined amount of hot water flows along the suction line **9** and the delivery line **15,** the supply of hot water is interrupted, the pump **29** is stopped and the shut-off valve **30** is closed.

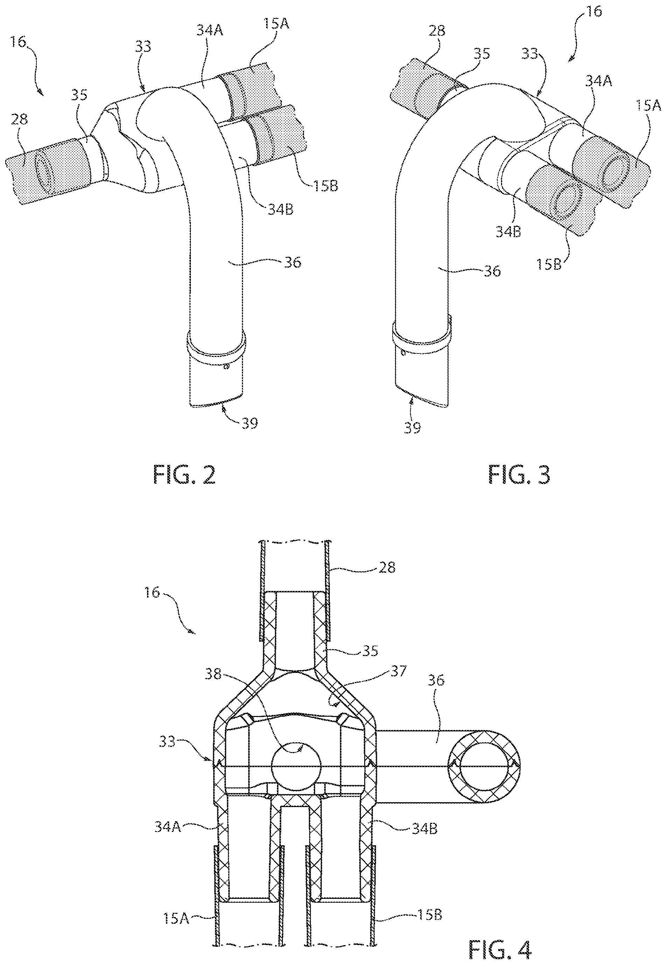

It is worth noting that during the suction generated by the pump **29,** drainage of the water flowing out of the ducts **15A** and **15B** is substantially total, which means that not even a part of water reaches the outlet of the milk dispensing nozzle **16.** This is possible thanks to the combined action of the suction force and of the position of the inlet of the drainage line **28** with respect to the outlets of the ducts **15A** and **15B** and the outlet of the milk dispensing nozzle **16.** To this aim, the milk dispensing nozzle **16** can have different conformations, provided that they are designed so that the inlet of the drainage line **28** is, for the water coming from the ducts **15A** and **15B,** a preferred path compared to the outlet of the milk dispensing nozzle **16.** A preferred embodiment of the milk dispensing nozzle **16** is shown in Figures 2 to 4 and will be described below in more detail.

At the end of the rinsing, the suction line **9** and the delivery line **15** remain full of water, which is sucked at the beginning of the following milk production cycle by operating the pump **29** for a predetermined amount of time, which is calculated based on the water volume to be sucked. Preferably, at the beginning of a new milk producing cycle, the pump **29** is operated at least for an amount of time enough to suck the water contained in the part of circuit upstream of the milk dispensing nozzle **16.** When the pump **29** is stopped and the shut-off valve **30** is closed, a new beverage producing cycle may commence.

Preferably, the above-described rinsing is carried out, as mentioned before, after each milk-based beverage producing cycle and after a predetermined amount of time during which the milk module **3** is inoperative. According to an alternative operating mode, the rinsing is not carried out after each milk-based beverage production cycle, but only when a given amount of time, for example a few minutes, has elapsed since the last time a milk-based beverage was dispensed. This operating mode has the advantage of optimizing cycle times, in case two or more beverages are produced in very close succession.

### 3) Washing with detergent

As already mentioned above, this in-depth washing is periodically carried out when the machine **1** is inoperative, typically at the end of a work day.

This in-depth washing comprises the three sub-steps described below:
i. The inlet of the suction line **9** is extracted, usually manually by an operator, from the milk container **8** and is inserted into another container (not shown) containing a detergent, preferably in the form of a tablet or of a concentrated liquid. The electronic control unit **32** is configured to cause, during this step, the shut-off valve **11** between the container with the detergent and the T joint **27** to open, the valve **14** of the air line **12** to close and the pump **10** to be inoperative so as to fluidically separate the suction line **9** from the delivery line **15.** The three-way valve **22** is controlled to allow hot water to flow from the water/steam supply duct **21** to the hot water supply line **26** so as to reach, through the suction line **9,** and fill the container containing the detergent, thus forming a water and detergent mixture.
ii. Once the container has been filled with hot water, the supply of hot water is interrupted and the pump **10** is operated to extract the water and detergent mixture from the container and cause it to flow along the suction line **9** and along both ducts **15A** and **15B** of the delivery line **15.** Simultaneously with the pump **10,** also the pump **29** is operated to suck the washing mixture and convey it, through the drainage line **28,** to the waste container **24.**
iii. Once the container is empty, at least one rinsing with clean hot water is carried out. To this aim, the above-described sub-steps i and ii are sequentially repeated, with the sole difference that no detergent is added to the container. Sub-steps i and ii are repeated, if necessary, until no more traces of detergent are detected in the rinsing water. To this aim, a conductivity sensor **31** may be used, which is preferably arranged close to the inlet of the suction line **9.** At the end of the rinsing, the inlet of the suction line **9** is placed again in the milk container **8** and the milk module **3** is ready for a new production cycle.

Conveniently, both during the washing with detergent and the rinsing with hot water, the pump **29** is stopped for a few instants and then operated again, so that, in the instants in which it is inoperative, a small amount of water flows through the outlet of the milk dispensing nozzle **16** to remove milk residues possibly present between the inlet of the drainage line **28** and the outlet of the milk dispensing nozzle **16.**

In the end, before the washing with detergent a small amount of hot or cold water is preferably caused to flow along the suction line **9** and the delivery line **15** and, then, sucked in the area of the milk dispensing nozzle **16** in order to reduce the quantity of residual milk present in the circuit.

In view of the foregoing, the advantage arising from the sucking of waste water through the pump **29** arranged on the drainage line **28** may be appreciated. By so doing, indeed, all components coming into contact with milk can be washed, included the entire delivery line **15** and part of the milk dispensing nozzle **16,** without having waste water flowing in the beverage dispensing compartment **5.**

Figure 2 shows, by way of example, a milk dispensing nozzle **16,** whose geometry is particularly advantageous, in combination with the suction effect of the pump **29,** to achieve the above-indicated advantages.

In particular, the milk dispensing nozzle **16** shown in Figure 2 comprises a collector body **33** having:
two inlet hose connectors **34A** and **34B,** to which the outlet ends of the ducts **15A** and **15B,** respectively, are coupled,
an outlet hose connector **35,** to which the inlet end of the drainage line **28** is coupled, and
a dispensing duct **36,** through which the milk flowing into the collector body **33** through the ducts **15A** and **15B** is dispensed into a glass in the beverage dispensing compartment **5.**

As shown in Figures 2, 3 and 4, the inlet hose connectors **34A** and **34B** and the outlet hose connector **35** are arranged on opposite sides of the collector body **33** and have respective mutually parallel axes lying in one and the same plane. In a preferred embodiment shown in Figures 2, 3 and 4, the lying plane is, in use, substantially horizontal. In alternative embodiments (not shown), however, the lying plane may be oriented differently, in particular it could be arranged so that the inlet hose connectors **34A** and **34B** are arranged at a higher level than the outlet hose connector **35.**

The collector body **33** defines an inner chamber **37,** which has, in a horizontal cross section, the shape of a funnel and communicates, in the larger area of its section, with the two inlet hose connectors **34A** and **34B** and, in the narrower area of its section, with the outlet hose connector **35.**

The dispensing duct **36** extends from the top of the collector body **33** and communicates with the chamber **37** through a hole **38** formed in an upper wall of the collector body **33** and having an axis that is substantially perpendicular to the lying plane of the axes of the inlet hose connectors **34A** and **34B** and of the outlet hose connector **35.**

As shown in Figures 2 and 3, the dispensing duct **36** develops in a vertical plane and comprises a proximal inverted U-shaped portion and a distal straight portion ending with the milk outlet **39.**

The particular shape of the collector body **33** and the relative position of the inlet hose connectors **34A** and **34B,** of the outlet hose connector **35** and of the dispensing duct **36** cause, during washing, during which the shut-off valve **30** is open and the pump **29** is operating, the drainage line **28** to represent a preferred path for the water coming from the ducts **15A** and **15B** and reaching the chamber **37.** Indeed, since the outlet hose connector **35** substantially faces the inlet hose connectors **34A** and **34B** in a supply direction of the flow that, through the inlet hose connectors **34A** and **34B,** enters the chamber **37,** the water flow into the chamber **37** is caused to flow in the same direction and, hence, to flow into the outlet hose connector **35,** rather than make a 90° deflection and flow into the dispensing duct **36.** Besides the position of the hole **38,** the inverted U shape of the proximal portion of the dispensing duct **36** also helps make the flow of water in the dispensing duct **36** less easy than it is in the outlet hose connector **35.**

The joined effect of the geometry of the milk dispensing nozzle **16** and of the suction force generated by the pump **29** results in the total convergence of the water flow towards the drainage line **28** and prevents water from reaching, even if in a very small amount, the milk outlet **39.**

Preferably, the ducts **15A** and **15B** and the drainage line **28** are formed by flexible hoses and the inlet hose connectors **34A** and **34B** and the outlet hose connector **35** are hose male quick connectors, where the ends of the ducts **15A** and **15B** and the inlet end of the drainage line **28,** respectively, are coupled through pressing.

Furthermore, the collector body **33** is preferably formed by two shells, which are manufactured by plastic material moulding and are mutually coupled by ultrasound welding.

In an alternative embodiment (not shown), the ducts **15A** and **15B** converge in a common end segment before joining the milk dispensing nozzle **16,** which, as a consequence, has a single inlet hose connector connected to the end segment.

## Claims

1. A milk module (**3**) for producing hot or cold, foamed or non-foamed milk, and integrable in a machine (**1**) for producing milk-based beverages;
the milk module (**3**) comprises:
a supply pump (**10**);
a suction line (**9**) extending from a fluid inlet to a suction side of the supply pump (**10**);
a delivery line (**15**) extending from a delivery side of the supply pump (**10**) to a dispensing nozzle (**16**) with an inlet portion (**34A, 34B**) and a dispensing outlet (**39**);
an electronic control unit (**32**) configured to operate the milk module (**3**) in a production mode, in which the suction line (**9**) is supplied with milk, and in a washing mode, in which the suction line (**9**) is supplied with either water or water and detergent; and
a drainage line (**28**) to drain washing water into a waste container (**24**) during operation in the washing mode;
**characterised in that** the drainage line (**28**) extends from the dispensing nozzle (**16**) to the waste container (**24**) and comprises a suction pump (**29**);
and **in that** the electronic control unit (**32**) is configured to operate the suction pump (**29**) during at least part of the washing mode to cause the washing water that has reached the dispensing nozzle (**16**) to flow into the drainage line (**28**) before reaching the dispensing outlet (**39**) of the dispensing nozzle (**16**).

2. The milk module (**3**) of claim **1**, further comprising:
a first valve device (**11**) arranged between the fluid inlet of the suction line (**9**) and the supply pump (**10**);
a water supply line (**26**) to supply water to the suction line (**9**) at an emanation point (**27**) between the first valve device (**11**) and the supply pump (**10**); and
a second valve device (**22**) operable to cause the water supply line (**26**) to be selectively supplied with water;
wherein the electronic control unit (**32**) is further configured to operate the milk module (**3**) in a first washing mode, preferably either between two successive production cycles or after a certain period of time;
and wherein, in the first washing mode, the electronic control unit (**32**) is further configured to:
control the first valve device (**11**) and the second valve device (**22**) to cause water to flow into the water supply line (**26**) and, therefrom, into the suction line (**9**) without reaching the fluid inlet of the suction line (**9**); and
co-ordinately operate the supply pump (**10**) and the suction pump (**29**) to cause water to flow along the suction line (**9**), the delivery line (**15**) and the drainage line (**28**).

3. The milk module (**3**) of claim **2,** wherein the electronic control unit (**32**) is further configured to operate the milk module (**3**) in a second washing mode, preferably at the end of the daily service;
wherein, during the first washing mode, the fluid inlet of the suction line (**9**) is immersed in a milk container (**8**) and during the second washing mode the fluid inlet of the suction line (**9**) is immersed in a detergent container;
wherein, in the second washing mode, the electronic control unit (**32**) is further configured to:
control the first valve device (**11**) and the second valve device (**22**) to cause water to flow into the water supply line (**26**) and reach the fluid inlet of the suction line (**9**) and fill the detergent container;
when the detergent container is full, co-ordinately operate the supply pump (**10**) and the suction pump (**29**) and control the first valve device (**11**) and second valve device (**22**) to prevent water from flowing in the water supply line (**26**) and to cause the water/detergent mixture in the detergent container to flow along the suction line (**9**), the delivery line (**15**) and the drainage line (**28**).

4. The milk module (**3**) of any one of the preceding claims, wherein the drainage line (**28**) has a fluid inlet fluidically connected to the dispensing nozzle (**16**) between the inlet portion (**34A, 34B**) and the dispensing outlet (**39**) of the dispensing nozzle (**16**).

5. The milk module (**3**) of claim **4,** wherein the dispensing nozzle (**16**) comprises a collector body (33) having an internal chamber (**37**) and comprising at least one inlet connector (**34A; 34B**), which is fluidically connected to a fluid outlet of the delivery line (**15**) and forms the inlet portion (**34A, 34B**) of the dispensing nozzle (**16**), an outlet connector (**35**), which is fluidically connected to a fluid inlet of the drainage line (**28**), and a milk dispensing duct (**36**) having a free end that forms the dispensing outlet (**39**) of the dispensing nozzle (**16**);
wherein the inlet connector (**34A; 34B**), the outlet connector (**35**) and the milk dispensing duct (36) open into the chamber (**37**) and are so arranged as to result in the outlet connector (**35**) substantially facing the inlet connector (**34A; 34B**) in the direction of supply of the fluid into the chamber (**37**) and the milk dispensing duct (**36**) departing from the chamber (**37**) in a direction substantially transversal to the direction of supply of the fluid into the chamber (**37**).

6. The milk module (**3**) of claim **5,** wherein the delivery line (**15**) comprises a bifurcation, at which the delivery line (**15**) divides into two delivery ducts (**15A, 15B**) which open into the dispensing nozzle (**16**) either separately or via a common terminal portion;
wherein, when the delivery ducts (**15A, 15B**) open into the dispensing nozzle (**16**) via a common terminal portion, the collector body (**33**) of the dispensing nozzle (**16**) comprises a single inlet connector (**34A; 34B**) fluidically connected to the common terminal portion;
and wherein, when the delivery ducts (**15A, 15B**) open into the dispensing nozzle (**16**) separately, the collector body (**33**) of the dispensing nozzle (**16**) comprises two inlet connectors (**34A, 34B**), each of which is associated to a respective delivery duct (**15A, 15B**); the two inlet connectors (**34A; 34B**) open into the chamber (**37**) in such a way that they both substantially face the outlet connector (**34A; 34B**) in the direction of supply of the fluid into the chamber (**37**).

7. The milk module (**3**) of claim **5** or **6,** wherein the at least one inlet connector (**34A; 34B**) and the outlet connector (**35**) have respective mutually parallel axes lying in one and the same plane; the milk dispensing duct (**36**) has an inlet (**38**) having an axis substantially perpendicular to the lying plane of the axes of the inlet connector (**34A; 34B**) and of the outlet connector (**35**).

8. The milk module (**3**) of claim **5,** wherein the axes of the inlet connector (**34A; 34B**) and of the outlet connector (**35**) lie in a horizontal plane and the axis of the inlet (**38**) of the milk dispensing duct (**36**) is vertical.

9. The milk module (**3**) of claim **8,** wherein the milk dispensing duct (**36**) extends in a vertical plane from the top of the collector body (**33**) of the dispensing nozzle (**16**) and comprises a proximal inverted U-shaped portion and a distal straight portion ending with the dispensing outlet (**39**).

10. The milk module (**3**) of any one of claims **5** to **9,** wherein the chamber (**37**) is funnel-shaped and has a wider section, in which the at least one inlet connector (**34A; 34B**) opens, and a narrower section, in which the outlet connector (**35**) opens.

11. The milk module (3) of any one of the preceding claims, further comprising an air line (12) to controllably supply air into the suction line (9); and a flow restriction (17) arranged downstream of the supply pump (10) to transform, when the milk module (3) operates in the production mode, an air/milk mixture into foamed milk.

12. The milk module (3) of claim 6, further comprising a heater (19) arranged along one of the two delivery ducts (15A) and selectively operable to heat milk; and an electronically-controllable shut-off valve (25) arranged along the other of the two delivery ducts (15B) and selectively operable to allow milk to flow therethrough.

13. A machine (**1**) for producing milk-based beverages comprising a milk module (**3**) according to any one of the preceding claims.

## Patentansprüche

1. Milchmodul (3) zum Herstellen heißer oder kalter, geschäumter oder ungeschäumter Milch, und integrierbar in eine Maschine (1) zum Herstellen von Getränken auf Milchbasis;
wobei das Milchmodul (3) umfasst:
eine Versorgungs- bzw. Förderpumpe (10);
eine Saugleitung (9), die sich von einem Flüssigkeitseinlass zu einer Ansaugseite der Förderpumpe (10) erstreckt;
eine Versorgungs- bzw. Zufuhrleitung (15), die sich von einer Versorgungs- bzw. Förderseite der Förderpumpe (10) zu einer Abgabedüse (16) mit einem Einlassabschnitt (34A, 34B) und einem Abgabeauslass (39) erstreckt;
eine elektronische Steuer- bzw. Regeleinheit (32), die konfiguriert ist, das Milchmodul (3) in einem Produktionsmodus, in dem die Saugleitung (9) mit Milch versorgt wird, und in einem Waschmodus zu betreiben, in dem die Saugleitung (9) entweder mit Wasser oder Wasser und Reinigungsmittel versorgt wird; und
eine Ablaufleitung (28), um während des Betriebs im Waschmodus Waschwasser in einen Abfallbehälter (24) abzulassen;
**dadurch gekennzeichnet, dass** sich die Ablaufleitung (28) von der Abgabedüse (16) zu dem Abfallbehälter (24) erstreckt und eine Saugpumpe (29) umfasst;
und **dass** die elektronische Steuer- bzw. Regeleinheit (32) konfiguriert ist, die Saugpumpe (29) zumindest während eines Teils des Waschmodus zu betreiben, um zu bewirken, dass das Waschwasser, das die Abgabedüse (16) erreicht hat, in die Ablaufleitung (28) fließt, bevor es den Abgabeauslasses (39) der Abgabedüse (16) erreicht.

2. Milchmodul (3) nach Anspruch 1, ferner umfassend:
eine erste Ventilvorrichtung (11), die zwischen dem Fluideinlass der Saugleitung (9) und der Förderpumpe (10) angeordnet ist;
eine Wasserzufuhrleitung (26), um der Saugleitung (9) an einem Austrittspunkt (27) zwischen der ersten Ventilvorrichtung (11) und der Förderpumpe (10) Wasser zuzuführen; und
eine zweite Ventilvorrichtung (22), die dahingehend operabel ist, zu bewirken, dass die Wasserzufuhrleitung (26) selektiv mit Wasser versorgt wird;
wobei die elektronische Steuer- bzw. Regeleinheit (32) ferner konfiguriert ist, das Milchmodul (3) in einem ersten Waschmodus zu betreiben, vorzugsweise entweder zwischen zwei aufeinanderfolgenden Produktionszyklen oder nach einem bestimmten Zeitraum;
und wobei die elektronische Steuer- bzw. Regeleinheit (32) in dem ersten Waschmodus ferner konfiguriert ist zum:
Steuern bzw. Regeln der ersten Ventilvorrichtung (11) und der zweiten Ventilvorrichtung (22), um zu bewirken, dass Wasser in die Wasserzufuhrleitung (26) und von dort in die Saugleitung (9) fließt, ohne den Flüssigkeitseinlass der Saugleitung (9) zu erreichen; und
koordinierten Betreiben die Förderpumpe (10) und der Saugpumpe (29), um zu bewirken, dass Wasser entlang der Saugleitung (9), der Zufuhrleitung (15) und der Ablaufleitung (28) fließt.

3. Milchmodul (3) nach Anspruch 2, wobei die elektronische Steuer- bzw.
Regeleinheit (32) ferner konfiguriert ist, das Milchmodul (3) in einem zweiten Waschmodus zu betreiben, vorzugsweise am Ende des täglichen Betriebs;
wobei während des ersten Waschmodus der Flüssigkeitseinlass der Saugleitung (9) in einen Milchbehälter (8) eingetaucht ist und während des zweiten Waschmodus der Flüssigkeitseinlass der Saugleitung (9) in einen Reinigungsmittelbehälter eingetaucht ist;
wobei die elektronische Steuer- bzw. Regeleinheit (32) in dem zweiten Waschmodus ferner konfiguriert ist zum:
Steuern bzw. Regeln der ersten Ventilvorrichtung (11) und der zweiten Ventilvorrichtung (22), um zu bewirken, dass Wasser in die Wasserzufuhrleitung (26) fließt und den Flüssigkeitseinlass der Saugleitung (9) erreicht und den Reinigungsmittelbehälter füllt;
wobei, wenn der Reinigungsmittelbehälter voll ist, Koordiniertes Betreiben der Förderpumpe (10) und der Saugpumpe (29) und Steuern bzw. Regeln der ersten Ventilvorrichtung (11) und der zweiten Ventilvorrichtung (22), um zu verhindern, dass Wasser in die Wasserzufuhrleitung (26) fließt, und um zu bewirken, dass das Wasser/Reinigungsmittel-Gemisch in dem Reinigungsmittelbehälter entlang der Saugleitung (9), der Zufuhrleitung (15) und der Ablaufleitung (28) fließt.

4. Milchmodul (3) nach einem der vorhergehenden Ansprüche, wobei die Ablaufleitung (28) einen Fluideinlass aufweist, der mit der Abgabedüse (16) zwischen dem Einlassabschnitt (34A, 34B) und dem Abgabeauslass (39) der Abgabedüse (16) in Fluidverbindung steht.

5. Milchmodul (3) nach Anspruch 4, wobei die Abgabedüse (16) einen Sammelkörper (33) mit einer Innenkammer (37) und zumindest einem Einlassverbinder (34A; 34B), der fluidisch mit einem Fluidauslass der Zufuhrleitung (15) verbunden ist und den Einlassabschnitt (34A, 34B) der Abgabedüse (16) bildet, einem Auslassverbinder (35), der fuldisch mit einem Fluideinlass der Ablaufleitung (28) verbunden ist, und einem Milchabgabekanal (36) umfasst, der ein freies Ende aufweist, das den Abgabeauslass (39) der Abgabedüse (16) bildet;
wobei der Einlassverbinder (34A; 34B), der Auslassverbinder (35) und der Milchabgabekanal (36) in die Kammer (37) offen sind bzw. münden und so angeordnet sind, dass im Ergebnis der Auslassverbinder (35) im Wesentlichen dem Einlassverbinder (34A; 34B) in der Zufuhrrichtung des Fluids in die Kammer (37) zugewandt ist und der Milchabgabekanal (36) von der Kammer (37) in einer Richtung abgeht, die im Wesentlichen quer zu der Zufuhrrichtung des Fluids in die Kammer (37) ist.

6. Milchmodul (3) nach Anspruch 5, wobei die Zufuhrleitung (15) eine Gabelung umfasst, an der sich die Zufuhrleitung (15) in zwei Zufuhrkanäle (15A, 15B) teilt, die in die Abgabedüse (16) offen sind bzw. münden, und zwar entweder separat oder über einen gemeinsamen Anschlussabschnitt;
wobei, wenn die Zufuhrkanäle (15A, 15B) über einen gemeinsamen Anschlussabschnitt in die Abgabedüse (16) offen sind bzw. münden, der Sammelkörper (33) der Abgabedüse (16) einen einzelnen Einlassverbinder (34A; 34B) umfasst, der fluidisch mit dem gemeinsamen Anschlussabschnitt verbunden ist;
und wobei, wenn die Zufuhrkanäle (15A, 15B) separat in die Abgabedüse (16) münden, der Sammelkörper (33) der Abgabedüse (16) zwei Einlassverbinder (34A, 34B) umfasst, von denen jeder mit einem jeweiligen Zufuhrkanal (15A, 15B) verbunden ist bzw. diesem zugeordnet ist; die beiden Einlassverbinder (34A; 34B) derart in die Kammer (37) münden, dass sie beide im Wesentlichen dem Auslassverbinder (34A; 34B) in der Richtung der Zufuhr des Fluids in die Kammer (37) zugewandt sind.

7. Milchmodul (3) nach Anspruch 5 oder 6, wobei der zumindest eine Einlassverbinder (34A; 34B) und der Auslassverbinder (35) jeweilige zueinander parallele Achsen aufweisen, die in ein und derselben Ebene liegen; der Milchabgabekanal (36) einen Einlass (38) aufweist, dessen Achse im Wesentlichen senkrecht zu der liegenden Ebene der Achsen des Einlassverbinders (34A; 34B) und des Auslassverbinders (35) ist.

8. Milchmodul (3) nach Anspruch 5, wobei die Achsen des Einlassverbinders (34A; 34B) und des Auslassverbinders (35) in einer horizontalen Ebene liegen und die Achse des Einlasses (38) des Milchabgabekanals (36) vertikal ist.

9. Milchmodul (3) nach Anspruch 8, wobei sich der Milchabgabekanal (36) in einer vertikalen Ebene von der Oberseite des Sammelkörpers (33) der Abgabedüse (16) erstreckt und einen proximalen umgekehrten U-förmigen Abschnitt und einen distalen geraden Abschnitt aufweist, der mit dem Abgabeauslass (39) endet.

10. Milchmodul (3) nach einem der Ansprüche 5 bis 9, wobei die Kammer (37) trichterförmig ist und eine breitere Sektion, in die der zumindest eine Einlassverbinder (34A; 34B) offen ist mündet, und eine schmalere Sektion aufweist, in die der Auslassverbinder (35) offen ist bzw. mündet.

11. Milchmodul (3) nach einem der vorhergehenden Ansprüche, ferner umfassend eine Luftleitung (12), um der Saugleitung (9) steuerbar bzw. regelbar Luft zuzuführen; und einen Strömungsbegrenzer (17), der stromabwärts der Förderpumpe (10) angeordnet ist, um, wenn das Milchmodul (3) im Produktionsmodus arbeitet, ein Luft/Milch-Gemisch in aufgeschäumte Milch umzuwandeln.

12. Milchmodul (3) nach Anspruch 6, ferner umfassend einen Heizer (19), der entlang eines der beiden Zufuhrkanäle (15A) angeordnet ist und selektiv zum Erwärmen von Milch betätigbar ist; und ein elektronisch steuerbares bzw. regelbares Absperrventil (25), das entlang des anderen der beiden Zufuhrkanäle (15B) angeordnet und selektiv betätigbar ist, um einen Milchdurchfluss zu erlauben.

13. Maschine (1) zum Herstellen von Getränken auf Milchbasis, umfassend ein Milchmodul (3) nach einem der vorhergehenden Ansprüche.

## Revendications

1. Module de préparation du lait (3) pour produire du lait chaud ou froid, avec mousse ou sans mousse et intégrable dans une machine (1) pour produire des boissons à base de lait ;
le module de préparation du lait (3) comprend :
une pompe d'alimentation (10) ;
une conduite d'aspiration (9) s'étendant d'une entrée de fluide à un côté d'aspiration de la pompe d'alimentation (10) ;
une conduite d'amenée (15) s'étendant à partir d'un côté d'amenée de la pompe d'alimentation (10) à une buse de distribution (16) avec une partie d'entrée (34A, 34B) et une sortie de distribution (39) ;
une unité électronique de commande (32) configurée pour actionner le module de préparation du lait (3) dans un mode de production, dans lequel la conduite d'aspiration (9) est alimentée avec du lait, et dans un mode de lavage, dans lequel la conduite d'aspiration (9) est alimentée avec de l'eau ou de l'eau et du détergent ; et
une conduite de drainage (28) pour évacuer l'eau de lavage dans un récipient de déchets (24) pendant le fonctionnement dans le mode de lavage ;
**caractérisé en ce que** la conduite de drainage (28) s'étend de la buse de distribution (16) au récipient de déchets (24) et comprend une pompe d'aspiration (29) ;
et **en ce que** l'unité électronique de commande (32) est configurée pour actionner la pompe d'aspiration (29) pendant au moins une partie du mode de lavage afin d'amener l'eau de lavage qui a atteint la buse de distribution (16) à s'écouler dans la conduite de drainage (28) avant d'atteindre la sortie de distribution (39) de la buse de distribution (16).

2. Module de préparation du lait (3) selon la revendication 1, comprenant en outre :
un premier dispositif de valve (11) agencé entre l'entrée de fluide de la conduite d'aspiration (9) et la pompe d'alimentation (10) ;
une conduite d'alimentation en eau (26) pour fournir l'eau à la conduite d'aspiration (9) au niveau d'un point d'émanation (27) entre le premier dispositif de valve (11) et la pompe d'alimentation (10) ; et
un deuxième dispositif de valve (22) pouvant être actionné pour amener la conduite d'alimentation en eau (26) à être sélectivement alimentée avec l'eau ;
dans lequel l'unité électronique de commande (32) est en outre configurée pour actionner le module de préparation du lait (3) dans un premier mode de lavage, de préférence entre deux cycles de production successifs ou après une certaine période de temps ;
et dans lequel, dans le premier mode de lavage, l'unité électronique de commande (32) est en outre configurée pour :
commander le premier dispositif de valve (11) et le deuxième dispositif de valve (22) pour amener l'eau à s'écouler dans la conduite d'alimentation en eau (26) et à partir de là, dans la conduite d'aspiration (9) sans atteindre l'entrée de fluide de la conduite d'aspiration (9) ; et
actionner de manière coordonnée la pompe d'alimentation (10) et la pompe d'aspiration (29) pour amener l'eau à s'écouler le long de la conduite d'aspiration (9), la conduite d'amenée (15) et la conduite de drainage (28).

3. Module de préparation du lait (3) selon la revendication 2, dans lequel l'unité électronique de commande (32) est en outre configurée pour actionner le module de préparation du lait (3) dans un deuxième mode de lavage, de préférence à la fin du service journalier ;
dans lequel, pendant le premier mode de lavage, l'entrée de fluide de la conduite d'aspiration (9) est immergée dans un récipient de lait (8) et pendant le deuxième mode de lavage, l'entrée de fluide de la conduite d'aspiration (9) est immergée dans un récipient de détergent ;
dans lequel, dans le deuxième mode de lavage, l'unité électronique de commande (32) est en outre configurée pour :
commander le premier dispositif de valve (11) et le deuxième dispositif de valve (22) afin d'amener l'eau à s'écouler dans la conduite d'alimentation en eau (26) et atteindre l'entrée de fluide de la ligne d'aspiration (9) et remplir le récipient de détergent ;
lorsque le récipient de détergent est rempli, actionner, de manière coordonnée, la pompe d'alimentation (10) et la pompe d'aspiration (29) et commander le premier dispositif de valve (11) et le deuxième dispositif de valve (22) pour empêcher l'eau de s'écouler dans la conduite d'alimentation en eau (26) et pour amener le mélange d'eau/détergent dans le récipient de détergent à s'écouler le long de la conduite d'aspiration (9), la conduite d'amenée (15) et la conduite de drainage (28).

4. Module de préparation du lait (3) selon l'une quelconque des revendications précédentes, dans lequel la conduite de drainage (28) a une entrée de fluide raccordée, de manière fluidique, à la buse de distribution (16) entre la partie d'entrée (34A, 34B) et la sortie de distribution (39) de la buse de distribution (16).

5. Module de préparation du lait (3) selon la revendication 4, dans lequel la buse de distribution (16) comprend un corps de collecteur (33) ayant une chambre interne (37) et comprenant au moins un connecteur d'entrée (34A ; 34B), qui est raccordé, de manière fluidique, à une sortie de fluide de la conduite d'amenée (15) et forme la partie d'entrée (34A, 34B) de la buse de distribution (16), un connecteur de sortie (35), qui est raccordé, de manière fluidique, à une entrée de fluide de la conduite de drainage (28), et un conduit de distribution de lait (36) ayant une extrémité libre qui forme la sortie de distribution (39) de la buse de distribution (16) ;
dans lequel le connecteur d'entrée (34A ; 34B), le connecteur de sortie (35) et le conduit de distribution de lait (36) s'ouvrent dans la chambre (37) et sont agencés de façon à ce que le connecteur de sortie (35) fait sensiblement face au connecteur d'entrée (34A ; 34B) dans la direction d'alimentation du fluide dans la chambre (37) et à ce que le conduit de distribution de lait (36) s'éloigne de la chambre (37) dans une direction sensiblement transversale par rapport à la direction d'alimentation du fluide dans la chambre (37).

6. Module de préparation du lait (3) selon la revendication 5, dans lequel la conduite d'amenée (15) comprend une bifurcation, au niveau de laquelle la conduite d'amenée (15) se divise en deux conduits d'amenée (15A, 15B) qui débouchent dans la buse de distribution (16) séparément ou via une partie terminale commune ;
dans lequel, lorsque les conduits d'amenée (15A, 15B) débouchent dans la buse de distribution (16) via une partie terminale commune, le corps de collecteur (33) de la buse de distribution (16) comprend un seul connecteur d'entrée (34A ; 34B) raccordé, de manière fluidique, à la partie terminale commune ;
et dans lequel, lorsque les conduits d'amenée (15A, 15B) débouchent dans la buse de distribution (16) séparément, le corps de collecteur (33) de la buse de distribution (16) comprend deux connecteurs d'entrée (34A, 34B), dont chacun est associé à un conduit d'amenée (15A, 15B) respectif ; les deux connecteurs d'entrée (34A ; 34B) débouchent dans la chambre (37) de sorte qu'ils font tous deux sensiblement face au connecteur de sortie (34A ; 34B) dans la direction d'alimentation du fluide dans la chambre (37).

7. Module de préparation du lait (3) selon la revendication 5 ou 6, dans lequel le au moins un connecteur d'entrée (34A ; 34B) et le connecteur de sortie (35) ont des axes respectifs mutuellement parallèles se trouvant dans un seul et même plan ; le conduit de distribution de lait (36) a une entrée (38) ayant un axe sensiblement perpendiculaire au plan horizontal des axes du connecteur d'entrée (34A ; 34B) et du connecteur de sortie (35).

8. Module de préparation du lait (3) selon la revendication 5, dans lequel les axes du connecteur d'entrée (34A ; 34B) et du connecteur de sortie (35) se trouvent dans un plan horizontal et l'axe de l'entrée (38) du conduit de distribution de lait (36) est vertical.

9. Module de préparation du lait (3) selon la revendication 8, dans lequel le conduit de distribution de lait (36) s'étend dans un plan vertical depuis le sommet du corps de collecteur (33) de la buse de distribution (16) et comprend une partie proximale en forme de U inversé et une partie droite distale se terminant par la sortie de distribution (39).

10. Module de préparation du lait (3) selon l'une quelconque des revendications 5 à 9, dans lequel la chambre (37) est en forme d'entonnoir et a une section plus large, dans laquelle le au moins un connecteur d'entrée (34A ; 34B) débouche et une section plus étroite, dans laquelle le connecteur de sortie (35) débouche.

11. Module de préparation du lait (3) selon l'une quelconque des revendications précédentes, comprenant en outre une conduite d'air (12) pour fournir de l'air, de manière contrôlable, dans la conduite d'aspiration (9) ; et une restriction de flux (17) agencée en aval de la pompe d'alimentation (10) pour transformer, lorsque le module de préparation du lait (3) fonctionne dans le mode de production, un mélange d'air/lait en lait avec mousse.

12. Module de préparation du lait (3) selon la revendication 6, comprenant en outre un dispositif de chauffage (19) agencé le long de l'un des deux conduits d'amenée (15A) et pouvant sélectivement fonctionner pour chauffer le lait ; et une valve d'arrêt (25) pouvant être commandée par voie électronique agencée le long de l'autre des deux conduits d'amenée (15B) et pouvant sélectivement fonctionner pour permettre au lait de s'écouler à travers cette dernière.

13. Machine (1) pour produire des boissons à base de lait comprenant un module de préparation du lait (3) selon l'une quelconque des revendications précédentes.
